# EUROPEAN PATENT APPLICATION

(11) **EP 4 450 148 A1**
(43) Date of publication of application: **23.10.2024**
(21) Application number: 22907346.5
(22) Date of filing: 08.12.2022
(51) Int. Cl.: B01D 61/04, B01D 65/08, C02F 5/00, C02F 5/10, C02F 5/12

(54) **SILICA CONTAMINATION INHIBITION METHOD AND SILICA CONTAMINATION INHIBITOR FOR REVERSE OSMOSIS MEMBRANE SYSTEM**

(30) Priority: 15.12.2021 JP 2021203512
(71) Applicant: Kurita Water Industries Ltd., Tokyo 164-0001 (JP)
(72) Inventor: OHTSUKA, Yuta, Tokyo 164-0001 (JP); TAKAHASHI, Junichi, Tokyo 164-0001 (JP); HAYAKAWA, Kunihiro, Tokyo 164-0001 (JP)
(74) Representative: Hoffmann Eitle
(86) International application number: PCT/JP2022/045255
(87) International publication number: WO 2023/112819

(57) **Abstract**

This silica fouling inhibition method for a reverse osmosis membrane system is characterized by causing an acrylic acid-based polymer and/or a maleic acid-based polymer, and a bound chlorine-based oxidizer and/or a bound bromine-based oxidizer to exist in a water to be treated. This silica fouling inhibitor for a reverse osmosis membrane system contains: a copolymer of acrylic acid and 2-acrylamide-2-methylpropanesulfonic acid and/or a terpolymer of acrylic acid, acrylamide methylpropanesulfonic acid, and N-substituted acrylamide; and a bound chlorine-based oxidizer and/or a bound bromine-based oxidizer.

## Description

### Technical Field

The present invention relates to a method and an inhibitor for suppressing silica fouling in a reverse osmosis membrane (RO membrane) system.

### Background Art

In seawater desalination plants and waste-water recovery plants, RO membrane devices that can efficiently remove electrolytes and middle- and low-molecular-weight organic components are widely used. In a water treatment devices including an RO membrane system, generally, pretreatment devices such as a pressure filtration device, a gravity filtration device, a coagulation sedimentation treatment device, a pressurized flotation filtration device, an immersion membrane device, and a membrane type pretreatment device are provided as parts before the RO membrane device, and water to be treated is pretreated by these pretreatment devices, and then supplied to the RO membrane device and subjected to an RO membrane separation treatment.

In such a water treatment device, silica contained in the water to be treated may cause blockage of the RO membrane, causing problems such as an increase in modular differential pressure and a decrease in the amount of permeated water. In order to prevent silica fouling, it may be necessary to operate at a low recovery rate to prevent silica scale from depositing.

Examples of silica scale inhibitors include those containing various hydrophilic polymers such as polyacrylamide (Patent Document 1), polyethylene glycol (Patent Document 2), polyvinylformamide (Patent Document 3), a terpolymer of acrylic acid, acrylamide methylpropanesulfonic acid, and N-substituted acrylamide (Patent Document 4), and polyvinylpyrrolidone (Patent Document 5) were proposed.

In order to prevent RO membrane fouling, it is described in Patent Document 6 that a chlorosulfamate oxidizing agent is added to the RO membrane feedwater.

### [Prior Art Document]

### [Patent Document]

Patent Document 1: Japanese Patent Application Laid-Open (JP-A) No. S61-107998
Patent Document 2: Japanese Patent Application Laid-Open (JP-A) No. H02-031894
Patent Document 3: Japanese Patent Application Laid-Open (JP-A) No. H10-323696
Patent Document 4: Japanese Patent Application Laid-Open (JP-A) No. H04-356580
Patent Document 5: Japanese Patent Application Laid-Open (JP-A) No. H11-057783
Patent Document 6: Japanese Patent Application Laid-Open (JP-A) No. 2010-201312

### SUMMARY

### Issues to be solved by the present invention

The above-mentioned scale inhibitor is intended to prevent fouling by the silica scale even when the silica is supersaturated, and this has the effect of preventing fouling on the Tail side (concentrated water outlet side) within the RO membrane device. However, unlike other scale types such as calcium carbonate, silica scale may also cause fouling on the Lead side (water supply side) within the RO membrane device.

An objective of the present invention is to provide a method and an inhibitor for suppressing silica fouling in a reverse osmosis membrane system that can suppress silica fouling not only on the Tail side but also on the Lead side of a reverse osmosis membrane device. Means for solving the issues

The gist of the present invention is as follows.
[1] A silica fouling inhibition method for a reverse osmosis membrane system, wherein an acrylic acid-based polymer and/or a maleic acid-based polymer; and a combined chlorine-based oxidizing agent and/or a combined bromine-based oxidizing agent are allowed to be present in water to be treated.
[2] The silica fouling inhibition method according to [1], wherein the acrylic acid-based polymer and/or the maleic acid-based polymer is at least one type of polymer selected from a group consisting of the following: a copolymer of polyacrylic acid, polymaleic acid, acrylic acid, and acrylamide methylpropanesulfonic acid; a terpolymer of acrylic acid, acrylamide methylpropanesulfonic acid, and N-substituted acrylamide; a copolymer of acrylic acid and sodium allyloxyhydroxypropane sulfonate; a copolymer of maleic anhydride, vinyl acetate, and acrylic acid alkyl ester; and a copolymer of maleic anhydride and isobutylene.

The silica fouling inhibition method according to [1], wherein the acrylic acid-based polymer is a copolymer of acrylic acid and acrylamide methylpropanesulfonic acid, or a terpolymer of acrylic acid, acrylamide methylpropanesulfonic acid, and N-substituted acrylamide.

[4] The silica fouling inhibition method according to any one of [1] to [3], wherein the combined chlorine-based oxidizing agent is a chlorosulfamic acid compound.

[5] A silica fouling inhibitor for a reverse osmosis membrane system, comprising: a copolymer of acrylic acid and acrylamide methylpropanesulfonic acid and/or a terpolymer of acrylic acid, acrylamide methylpropanesulfonic acid, and N-substituted acrylamide; and a combined chlorine-based oxidizing agent and/or a combined bromine-based oxidizing agent.

[6] The silica fouling inhibitor according to [3], wherein the combined chlorine-based oxidizing agent is a chlorosulfamic acid compound.

### Effects of the Invention

In the present invention, by allowing both the polymer as the scale inhibitor and the combined chlorine-based oxidizing agent and/or the combined bromine-based oxidizing agent as an auxiliary agent present in water to be treated, not only the scale on the Tail side of the reverse osmosis membrane system is suppressed, but also the silica fouling on the Lead side is suppressed by keeping the membrane clean with the combined chlorine-based oxidizing agent and/or the combined bromine-based oxidizing agent.

### BRIEF DESCRIPTION OF THE DRAWINGS

FIG. 1 is a graph showing experimental results.
FIG. 2 is a graph showing experimental results.

### DESCRIPTION OF THE EMBODIMENTS

In the present invention, to suppress silica fouling in a RO membrane system, an acrylic acid-based polymer and/or a maleic acid-based polymer, a combined chlorine-based oxidizing agent and/or a combined bromine-based oxidizing agent are present in the water to be treated.

The silica fouling inhibitor of the present invention combines the acrylic acid-based polymer and/or the maleic acid-based polymer with the combined chlorine-based oxidizing agent and/or the combined bromine-based oxidizing agent, and the silica fouling inhibitor may be used as separate agents or as a single agent.

Preferably, at least one type of polymer as the acrylic acid-based polymer and the maleic acid-based polymer is selected from a group consisting of the following: a copolymer of polyacrylic acid, polymaleic acid, acrylic acid, and acrylamide methylpropanesulfonic acid; a terpolymer of acrylic acid, acrylamide methylpropanesulfonic acid, and N-substituted acrylamide; a copolymer of acrylic acid and sodium allyloxyhydroxypropane sulfonate; a copolymer of maleic anhydride, vinyl acetate, and acrylic acid alkyl ester; and a copolymer of maleic anhydride and isobutylene. Particularly, a copolymer of acrylic acid and acrylamide methylpropanesulfonic acid or a terpolymer of acrylic acid, acrylamide methylpropanesulfonic acid, and N-substituted acrylamide is suitable.

In the case of using a copolymer of acrylic acid (AA) and acrylamide methylpropanesulfonic acid (AMPS), a copolymer copolymerized in a ratio of AA:AMPS=50 to 99:1 to 50 (molar ratio) is suitable. In the case of using a terpolymer of acrylic acid, acrylamide methylpropanesulfonic acid, and N-substituted acrylamide, a copolymer copolymerized in a ratio of AA:AMPS:(N-substituted acrylamide) = 60 to 98:1 to 20:1 to 20 (molar ratio, 100 in total for the three) is suitable.

The acrylic acid-based polymer and the maleic acid-based polymer preferably have a weight average molecular weight of 1000 to 50000, particularly 1500 to 25000. It is noted that the weight average molecular weight is a value calculated in terms of sodium polyacrylate measured by GPC.

A chlorosulfamic acid compound is suitable to be used as the combined chlorine-based oxidizing agent and the combined bromine-based oxidizing agent.

Chlorosulfamic acid is obtained by mixing a chlorine-based oxidizing agent such as hypochlorous acid and a sulfamic acid compound such as sulfamate. In other words, when a chlorine-based oxidizing agent such as hypochlorite and a sulfamic acid compound such as sulfamate are mixed, these combine to form and stabilize chlorosulfamate, and it is possible to maintain a stable free chlorine concentration in water without the pH-dependent difference in dissociation properties and resulting fluctuations in free chlorine concentration, as is the case with chloramines.

The chlorine-based oxidizing agent used in the present invention is not particularly limited, and examples thereof include chlorine gas, chlorine dioxide, hypochlorous acid or a salt thereof, chlorous acid or a salt thereof, chloric acid or a salt thereof, perchloric acid or a salt thereof, chlorinated isocyanuric acid or a salt thereof, etc. Among these, specific examples of salt forms include alkali metal hypochlorites such as sodium hypochlorite and potassium hypochlorite, alkaline earth metal hypochlorites such as calcium hypochlorite and barium hypochlorite, alkali metal chlorites such as sodium chlorite and potassium chlorite, alkaline earth metal chlorites, such as barium chlorite, other metal chlorites, such as nickel chlorite, alkali metal chlorates such as ammonium chlorate, sodium chlorate, potassium chlorate, alkaline earth metal chlorates such as calcium chlorate and barium chlorate, etc. These chlorine-based oxidizing agents may be used alone or in combination of two or more. Among these, hypochlorite is easy to handle and may be preferably used.

Examples of the sulfamic acid compounds used in the present invention include a compound represented by the general formula [1] below or a salt thereof.

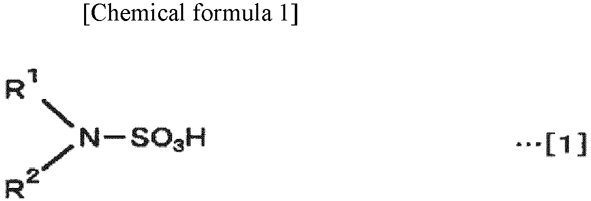

However, in the general formula [1], R¹ and R² are each independently hydrogen or a hydrocarbon group having 1 to 8 carbon atoms.)

Examples of such sulfamic acid compounds include, in addition to sulfamic acid in which R¹ and R² are both hydrogen, N-methylsulfamic acid, N,N-dimethylsulfamic acid, N-phenylsulfamic acid, etc.

Examples of the salts of sulfamic acid compound include alkali metal salts such as sodium salts and potassium salts, alkaline earth metal salts such as calcium salts, strontium salts, barium salts, other metal salts such as manganese salts, copper salts, zinc salts, iron salts, cobalt salts, nickel salts, and ammonium salts and guanidine salts, etc., and specifically, include sodium sulfamate, potassium sulfamate, calcium sulfamate, strontium sulfamate, barium sulfamate, iron sulfamate, zinc sulfamate, etc. Sulfamic acid and these sulfamic acid salts may be used alone or in combination of two or more.

The acrylic acid-based polymer and/or the maleic acid-based polymer are preferably added so that the concentration in the water to be treated is 0.1 to 5 mg/L, particularly 0.15 to 3 mg/L. Further, the chlorosulfamic acid compound is preferably added so that the concentration in the water to be treated is 0.1 to 10 mg/L, particularly 0.3 to 5 mg/L as Cl₂. Cl₂ concentration is a value measured by the DPD method.

The acrylic acid-based polymer and/or the maleic acid-based polymer and the chlorosulfamic acid compound may be separately added to the water to be treated.

Pretreatment devices such as a pressure filtration device, a gravity filtration device, a coagulation sedimentation treatment device, a pressurized flotation filtration device, an immersion membrane device, and a membrane type pretreatment device are provided as parts before the RO membrane device, and water to be treated is pretreated by these pretreatment devices, and then supplied to the RO membrane device and subjected to an RO membrane separation treatment. The acrylic acid-based polymer and/or the maleic acid-based polymer are added after the pretreatment. The chlorosulfamic acid compound may be added after the pretreatment, or the residue of the chlorosulfamic acid compound present in the pretreatment or in the early stage of the pretreatment may be added in any form of water systems.

The ratios of each of the acrylic acid-based polymer and/or the maleic acid-based polymer and the chlorosulfamic acid compound in the silica scale inhibitor formed as a single agent of the present invention may be such that the concentration of each component when added to the water to be treated falls within the above range.

### [Raw water]

In the present invention, there is no particular limitation on the raw water to be treated, and the present invention is applicable to all water to which treatment by RO membrane is applied, and various types of waste-water such as industrial water, city water (tap water), and well water, may be targeted. The present invention is particularly suitable for water treatment by RO membrane in the field of waste-water recovery, and examples include cooling discharged water from cooling equipment used in building air conditioning and industrial processes such as the chemical industry, paper industry, steel industry, and electric power industry. The cooling discharged water typically includes blow water from a cooling tower, but also includes all discharged water discharged from a circulating cooling water system. In this case, for example, a part of or all of the circulating cooling water may be extracted from the circulation piping of the circulating cooling water system, treated with the RO membrane according to the present invention, and then returned to the circulating cooling water system. Moreover, the raw water may also be the discharged water that is branched and discharged from piping that supplies cooling water to cooling tower cooling water and circulating cooling water filtration device. In addition, it may be applied to water supply systems for boilers.

When such cooling discharged water is used as raw water, since the raw water may already contain the polymer-based scale dispersant used in the present invention, this may be used as the polymer-based scale dispersant for the RO membrane feedwater, which will be described later.

### [Pretreatment]

Although the raw water may be used as the RO membrane feedwater as it is, it may be subjected to turbidity removal treatment as a pretreatment.

Although there are no particular limitations on the means of turbidity removal treatment, it is preferable to use any one of a microfiltration (MF) membrane, an ultrafiltration (UF) membrane, a filter, a safety filter, and a strainer, or two or more of these in combination due to their ability to remove turbidity and colloidal components in raw water, which causes RO membrane fouling, without affecting the water quality conditions of the RO membrane feedwater, which will be described later. For example, after removing coarse turbidity and foreign matter with a strainer, turbidity removal treatment may be performed with a turbidity removal membrane such as an MF membrane or a UF membrane, in this case, treatment with a strainer may prevent the subsequent MF membrane or UF membrane from being damaged by the coarse turbidity and foreign matter.

### [RO membrane]

The RO membrane used in the present invention is preferably a polyamide-based RO membrane. There is no particular limitation on the shape of the RO membrane, and any of the hollow fiber type, spiral type, etc. may be used.

### Examples

### [Example 1, Comparative Example 1]

Well water having the water quality shown in Table 1 was passed through a reverse osmosis membrane device (manufactured by Kurita Water Industries Ltd.) at a recovery rate of 70 to 74%. From the start of passage of water to day 62, Chemical 1 (a chemical containing acrylic acid-based polymer (a terpolymer with a weight average molecular weight of 10,000 obtained by copolymerizing acrylic acid, acrylamide methylpropanesulfonic acid, and N-substituted acrylamide at a molar ratio of 85:10:5)) was added at 1 mg/L as an acrylic acid-based polymer (Comparative Example 1). From day 62 to day 100, Chemical 2 (a chemical containing acrylic acid-based polymer (a copolymer with a weight average molecular weight of 20,000 obtained by copolymerizing acrylic acid and acrylamide methylpropanesulfonic acid at a molar ratio of 80:20) and chlorosulfamic acid) was added at 0.35 mg/L as an acrylic acid-based polymer and 0.5 mg/L as Cl₂ (Example 1).

The recovery rate of the RO device was operated at 70% from the start of passage of water to day 34 and from day 62 to day 76, and was operated at 74% from day 34 to day 62 and from day 76 to day 100.

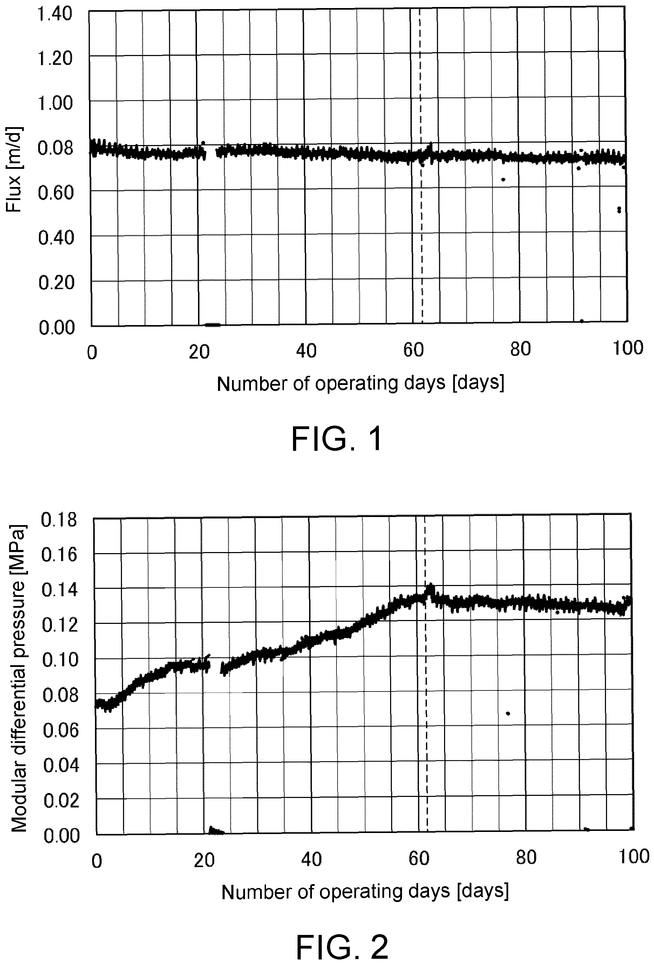

FIG. 1 shows the flux, and FIG. 2 shows the changes in the modular differential pressure of the RO. Although the flux was stable under all conditions, up to day 62 of treatment with Chemical 1 (Comparative Example 1), an increase in modular differential pressure (difference between feedwater pressure and concentrated water pressure) was observed, and after day 62 of treatment with Chemical 2 (Example 2), the increase in modular differential pressure was suppressed.

When the membrane on the Lead side after the water passage was disassembled and analyzed by SEM-EDS, silica fouling was confirmed on the membrane surface as a whole, and when confirmed by EDS, the silica deposition amount ([silica weight]/[membrane weight + membrane contaminant weight] x 100%) was 13.5 wt%. It is considered that this silica contaminant was deposited by day 62 of the water passage.

From this result, treatment with Chemical 1 until day 62 of the water passage suppressed silica scale on the concentrated Tail side, but silica complex fouling on the Lead side near the feedwater was not suppressed; on the other hand, treatment with Chemical 2 after day 62 of the water passage, it became clear that both silica scale in the supersaturated region and silica complex fouling on the Lead side were suppressed.

**[Table 1]**

| Item | Value [mg/L] |
|---|---|
| Conductivity | 34.9 |
| pH | 7.7 |
| Total hardness | 102 |
| Chloride ion | 25 |
| Sulfate ion | 40.5 |
| Nitrate ion | 12 |
| Silica (SiO₂) | 50 |
| Sodium | 24.7 |
| Iron | Less than 0.01 |
| Manganese | Less than 0.01 |

### [Comparative Example 2]

Water having the water quality shown in Table 2 was passed through a reverse osmosis membrane system (manufactured by Kurita Water Industries Ltd.) at a recovery rate of 80%. Although 0.2 mg/L and 0.3 mg/L of a mixture of a maleic acid-based polymer (a copolymer with a weight average molecular weight of 1,200 obtained by copolymerizing maleic anhydride, vinyl acetate, and acrylic acid alkyl ester at a molar ratio of 70:15:15) and an acrylic acid-based polymer (polyacrylic acid with a weight average molecular weight of 3,000) were added as polymer components as scale inhibitors, respectively, an increase in the modular differential pressure was confirmed.

After water passage, when the membrane on the Lead side was disassembled and analyzed by SEM-EDS, silica fouling was confirmed on the membrane surface as a whole, and when the contaminated membrane was cut out and subjected to XRF analysis, 32.0 wt% Si was detected. When this deposit was scraped off and the acid-insoluble content was analyzed, it was detected to be 11.4 wt%. According to this result, simply adding a scale inhibitor may not prevent silica fouling occurring on the Lead side.

**[Table 2]**

| Item | Value |
|---|---|
| Conductivity mS/m | 27.0 |
| pH | 7.49 |
| Total hardness [mg/L] | 225.5 |
| Chloride ion | 15.6 |
| Sulfate ion | 24.0 |
| Nitrate ion | 8.1 |
| Silica (SiO₂) | 4.3 |
| Potassium | 2.8 |
| Iron | 0.05 |

### [Comparative Example 3]

Water having the water quality shown in Table 3 was passed through a reverse osmosis membrane system (manufactured by Kurita Water Industries Ltd.) at a recovery rate of 50%. Although a scale inhibitor was not added and a combined chlorine-based oxidizing agent (manufactured by Kurita Water Industries Ltd.) was added at 2 mg/L as Cl₂, an increase in modular differential pressure was confirmed.

After water passage, when the membrane on the Lead side was disassembled and analyzed by SEM-EDS, silica fouling was confirmed on the membrane surface as a whole. When this deposit was scraped off and the acid-insoluble content was analyzed, it was detected to be 4.6 wt%. According to this result, simply adding a combined chlorine-based oxidizing agent may not prevent silica fouling occurring on the Lead side.

**[Table 3]**

| Item | Value |
|---|---|
| Conductivity [mS/m] | 123 |
| pH | 6.9 |
| Total hardness [mg/L-CaCO₃] | 416 |
| Chloride ion [mg/L] | 256 |
| Sulfate ion [mg/L] | 162 |
| Silica (SiO₂) [mg/L] | 5 |
| Sodium [mg/L] | 68.6 |
| Iron [mg/L] | Less than 0.08 |

Although the present invention has been described in detail with reference to a particular embodiment, it is apparent to a person skilled in the art that various modifications can be made therein without departing from the spirit and scope of the present invention.
The present application is based on Japanese Patent Application No. 2021-203512 filed on December 15, 2021, which is incorporated herein by reference in its entirety.

## Claims

1. A silica fouling inhibition method for a reverse osmosis membrane system, wherein
an acrylic acid-based polymer and/or a maleic acid-based polymer; and
a combined chlorine-based oxidizing agent and/or a combined bromine-based oxidizing agent are allowed to be present in water to be treated.

2. The silica fouling inhibition method according to claim 1, wherein the acrylic acid-based polymer and/or the maleic acid-based polymer is at least one type of polymer selected from a group consisting of: a copolymer of polyacrylic acid, polymaleic acid, acrylic acid, and acrylamide methylpropanesulfonic acid; a terpolymer of acrylic acid, acrylamide methylpropanesulfonic acid, and N-substituted acrylamide; a copolymer of acrylic acid and sodium allyloxyhydroxypropane sulfonate; a copolymer of maleic anhydride, vinyl acetate, and acrylic acid alkyl ester; and a copolymer of maleic anhydride and isobutylene.

3. The silica fouling inhibition method according to claim 1, wherein the acrylic acid-based polymer is a copolymer of acrylic acid and acrylamide methylpropanesulfonic acid, or a terpolymer of acrylic acid, acrylamide methylpropanesulfonic acid, and N-substituted acrylamide.

4. The silica fouling inhibition method for the reverse osmosis membrane system according to any one of claims 1 to 3, wherein the acrylic acid-based polymer is a copolymer obtained by copolymerizing acrylic acid (AA) and acrylamide methylpropanesulfonic acid (AMPS) in a ratio of AA:AMPS=50 to 99:1 to 50 (molar ratio).

5. The silica fouling inhibition method for the reverse osmosis membrane system according to any one of claims 1 to 4, wherein a weight average molecular weight of the acrylic acid-based polymer is 1000 to 50000.

6. The silica fouling inhibition method according to any one of claims 1 to 5, wherein the combined chlorine-based oxidizing agent is a chlorosulfamic acid compound.

7. The silica fouling inhibition method for the reverse osmosis membrane system according to claim 1, wherein the acrylic acid-based polymer and/or the maleic acid-based polymer are added to water to be treated so that a concentration in the water to be treated becomes 0.1 to 5 mg/L, and a chlorosulfamic acid compound is added to the water to be treated so that a concentration in the water to be treated becomes 0.1 to 10 mg/L as Cl₂.

8. A silica fouling inhibitor for a reverse osmosis membrane system, comprising:
a copolymer of acrylic acid and acrylamide methylpropanesulfonic acid and/or a terpolymer of acrylic acid, acrylamide methylpropanesulfonic acid, and N-substituted acrylamide; and
a combined chlorine-based oxidizing agent and/or a combined bromine-based oxidizing agent.

9. The silica fouling inhibitor according to claim 8, wherein the combined chlorine-based oxidizing agent is a chlorosulfamic acid compound.
